# Europäisches Patentamt

## European Patent Office

## Office européen des brevets

(19)

(11) Veröffentlichungsnummer: **0 062 741**
**B1**

(12) **EUROPÄISCHE PATENTSCHRIFT**

(45) Veröffentlichungstag der Patentschrift:
**23.10.85**

(51) Int. Cl.⁴: **D 06 N 7/00, E 04 F 15/16**

(21) Anmeldenummer: **82100995.8**

(22) Anmeldetag: **11.02.82**

(54) **Bodenbelag-Warenbahn mit einer Unterlagswarenbahn und Verfahren zu deren Herstellung.**

(30) Priorität: **04.04.81 DE 3113636**

(43) Veröffentlichungstag der Anmeldung:
**20.10.82 Patentblatt 82/42**

(45) Bekanntmachung des Hinweises auf die Patenterteilung:
**23.10.85 Patentblatt 85/43**

(84) Benannte Vertragsstaaten:
**AT BE CH DE FR GB IT LI LU NL SE**

(56) Entgegenhaltungen:
**CH - A - 9 288**
**FR - A - 1 600 936**
**FR - A - 2 483 847**
**GB - A - 971 958**
**US - A - 3 669 779**
**US - A - 3 728 182**
**US - A - 4 059 465**
**US - A - 4 171 395**

(73) Patentinhaber: **J.F. Adolff AG,**
**Eugen-Adolff-Strasse 102 Postfach 1109,**
**D-7150 Backnang (DE)**

(72) Erfinder: **Der Erfinder hat auf seine Nennung verzichtet**

(74) Vertreter: **Hoeger, Stellrecht & Partner,**
**Uhlandstrasse 14c, D-7000 Stuttgart 1 (DE)**

BUNDESDRUCKEREI BERLIN

**Beschreibung**

Die Erfindung betrifft eine elastische Bodenbelagsbahn aus einer Polware als oberer Warenbahn, welche einen Öffnungen für den Durchtritt von Wasser aufweisenden, den Pol haltenden Träger besitzt, dessen Unterseite nur partiell mit einem zwischen den Öffnungen thermoplastische Bereiche bildenden Thermoplasten beschichtet ist, und aus einer elastischen unteren Warenbahn, die gleichfalls Öffnungen für den Wasserdurchtritt aufweist und deren Oberseite mindestens teilweise von einem zwischen den Öffnungen thermoplastische Bereiche bildenden Thermoplasten gebildet sowie mit der oberen Warenbahn fest verbunden ist.

Weiterhin betrifft die Erfindung ein Verfahren zur Herstellung einer solchen Bodenbelagsbahn, bei dem die beiden Warenbahnen synchron bewegt und so geführt werden, daß sie vor dem Verbinden aufeinander zu verlaufen und die Unterseite der oberen Warenbahn sowie die Oberseite der unteren Warenbahn auf derselben Seite liegen, und bei dem der Thermoplast an der Unterseite der oberen Warenbahn durch Erhitzen mindestens teilweise plastifiziert wird, worauf die beiden Warenbahnen gegeneinandergepreßt und miteinander verbunden werden. Ein Verfahren dieser Art ist bereits aus der GB-A-971 958 bekannt. Insbesondere befaßt sich die Erfindung mit sogenannten künstlichen Rasen für Sportfelder etc. und mit einem Verfahren zu deren Herstellung.

Auf dem Markt werden schon derartige künstliche Rasen angeboten, bei denen die im Gebrauch obere Warenbahn einen Grundträger aufweist, in dem die Polfäden bzw. Polbändchen verankert sind und der auf seiner Rückseite ganz oder teilweise mit einem thermoplastischen Material, zum Beispiel Weich-PVC, beschichtet ist, und zwar unter anderem zu dem Zweck, die Polfäden noch besser im Grundträger zu fixieren. Bei der im Gebrauch unteren Warenbahn handelt es sich um eine geschlossene oder Durchbrechungen aufweisende elastische Matte, die aus einem zum Beispiel mit Weich-PVC überzogenen Kern aus einem Gewebe, einem Gestrick oder dergleichen besteht. Beide Warenbahnen sind dauerhaft miteinander verbunden.

Eine erste Teilaufgabe der Erfindung war es, einen wasserdurchlässigen und elastischen Bodenbelag für Sportfelder und dergleichen zu schaffen, der sich verhältnismäßig einfach und zuverlässig herstellen läßt. Eine zweite Teilaufgabe bestand darin, ein einfaches, schon vor dem Verlegen des Bodenbelags durchzuführendes Verfahren zum Verbinden der beiden Warenbahnen anzugeben, das sich auch kontinuierlich durchführen läßt, um mit seiner Hilfe größere Chargen der beiden Warenbahnen, die zum Beispiel in aufgerollter Form vorliegen, billig und dauerhaft miteinander verbinden zu können.

Diese Teilaufgaben lassen sich erfindungsgemäß dadurch lösen, daß die beiden Warenbahnen nur partiell miteinander verschweißt sind, indem thermoplastische Bereiche der oberen Warenbahn mit thermoplastischen Bereichen der unteren Warenbahn verschweißt sind (erste Teilaufgabe); und daß die thermoplastischen Bereiche beider Warenbahnen vor dem Gegeneinanderpressen durch mindestens eine Wärmequelle mindestens teilweise plastifiziert werden und daß die Bodenbelagsbahn nach dem Gegeneinanderpressen zum Abkühlen auf einem Förderband abgelegt wird (zweite Teilaufgabe). Man könnte den obenerwähnten Vorgang auch als Heißkleben bezeichnen. Bei dem erfindungsgemäßen Verfahren läßt es sich vermeiden, daß ein Kleber verarbeitet werden muß oder relativ komplizierte Arbeitsgänge wie ein Vernähen der beiden Warenbahnen notwendig werden; außerdem führt das erfindungsgemäße Verfahren zu einer Verbindung, deren Charakter sich außerordentlich leicht steuern läßt, da man zwischen einer vollflächigen Verklebung oder Verschweißung und einer nur partiellen Verschweißung beliebig variieren kann; so könnte man die miteinander zu verbindenden Warenbahnen zum Beispiel nur in streifenförmigen Bereichen erhitzen, welche sich in Warenbahnlängsrichtung erstrecken und im Querabstand voneinander angeordnet sind, wobei sich Streifenbreite und Streifenanzahl beliebig wählen ließe — man benötigt hierzu nur entsprechend ausgebildete und angeordnete Wärmequellen.

Als solche empfehlen sich besonders Infrarotstrahler, so daß eine bevorzugte Ausführungsform des erfindungsgemäßen Verfahrens durch die Verwendung mindestens eines Infrarotstrahlers als Wärmequelle gekennzeichnet ist.

Um die Gefahr eines Verbrennens des thermoplastischen Materials auszuschalten, empfiehlt es sich, die Unterseite der Bodenbelag-Warenbahn und die Oberseite der Unterlagswarenbahn vor dem Zusammenführen der beiden Warenbahnen vorzuwärmen und unmittelbar vor dem Aneinanderlegen dadurch zu plastifizieren, daß die Wärmestrahlung mindestens eines Infrarotstrahlers in den von den Warenbahnen beim Zusammenführen gebildeten Zwickel hineingerichtet wird. Auf diese Weise muß nicht mit so hohen Energiedichten erhitzt werden wie wenn man das thermoplastische Material der beiden Warenbahnen beim Durchlauf an einer einzigen Stelle vom kalten Zustand bis zum Erweichen erhitzt.

Um ein formstabiles Endprodukt zu erhalten, ist es erfindungsgemäß erforderlich, die miteinander verbundenen Warenbahnen vor dem Aufrollen oder dergleichen zum Abkühlen auf einem Förderband anzulegen, und zwar am besten mit nach oben gerichtetem Pol, und bei einer bevorzugten Ausführungsform des erfindungsgemäßen Verfahrens werden die Warenbahnen anschließend auf Sollbreite geschnitten, indem längs einer oder beider Längskanten der miteinander verbundenen Warenbahnen zum Beispiel mit einem Messer Randstreifen abgeschnitten werden. Man könnte auch daran denken, die Längsränder der miteinander verbundenen Warenbahnen auf dem Förderband zu fixieren, beispielsweise dadurch, daß man das Förderband mit zwei im Querabstand voneinander angeordneten Reihen von Nägeln oder Nadeln versieht, die dann in die beiden Warenbahnen eingreifen, um ein Schrumpfen der Warenbahnen in Querrichtung im Zuge des Abkühlens zu verhindern. In der Regel wird man das Produkt jedoch frei schrumpfen lassen.

Da sich bei Anwendung des erfindungsgemäßen Verfahrens das Verarbeiten eines Klebers und hohe Anpreßdrücke beim Verbinden der beiden Warenbahnen miteinander vermeiden lassen, eröffnet die Erfindung schließlich auch einen Weg zur Herstellung eines künstlichen Rasens, welcher eine Vielzahl kleiner Wasserreservoirs enthält, über die sich ein mit einem künstlichen Rasen versehenes Sportfeld in heißen Ländern bis zu einem gewissen Grad »klimatisieren« läßt. Verwendet man nämlich eine Unterlagswarenbahn, welche zumindest an ihrer Oberfläche aus einem thermoplastischen Material besteht und auf ihrer Oberseite wannenförmige Vertiefungen aufweist, und verwendet man ferner eine wasserdurchlässige Bodenbelag-Warenbahn, so werden bei einer bevorzugten Ausführungsform des erfindungsgemäßen Verfahrens im wesentlichen nur die Räder der wannenförmigen Vertiefungen mit der Rückbeschichtung der Bodenbelag-Warenbahn verschweißt und so die Vertiefungen zumindest teilweise erhalten. Besprengt man einen solchen künstlichen Rasen, so läuft das Wasser zwar durch die obere Warenbahn hindurch, wird dann aber teilweise durch die wannenförmigen Vertiefungen zurückgehalten, so daß das verdampfende Wasser die Oberfläche eines Sportfelds verhältnismäßig kühl hält.

Weitere Merkmale, Vorteile und Einzelheiten der Erfindung ergeben sich aus der nachfolgenden Beschreibung sowie der zeichnerischen Darstellung der erfindungsgemäßen Bodenbelagsbahn und einer besonders vorteilhaften Ausführungsform des erfindungsgemäßen Verfahrens in der Zeichnung zeigt

Fig. 1 ein Stück einer einen künstlichen Rasen bildenden oberen Warenbahn in perspektivischer Ansicht schräg von unten;

Fig. 2 ein Stück einer unteren Warenbahn schräg von oben;

Fig. 3 einen Schnitt einer Variante der Bodenbelagsbahn der Erfindung;

Fig. 4 eine erfindungsgemäße Anlage zur Durchführung des Verfahrens der Erfindung, und zwar in einer stark vereinfachten Seitenansicht;

Fig. 5 denjenigen Teil der Anlage, in dem die beiden Warenbahnen miteinander verschweißt werden, in etwas größerem Maßstab und teilweise im Schnitt längs einer vertikalen Ebene; und

Fig. 6 eine Ansicht eines Teils des in Fig. 4 gezeigten Förderbands schräg von oben.

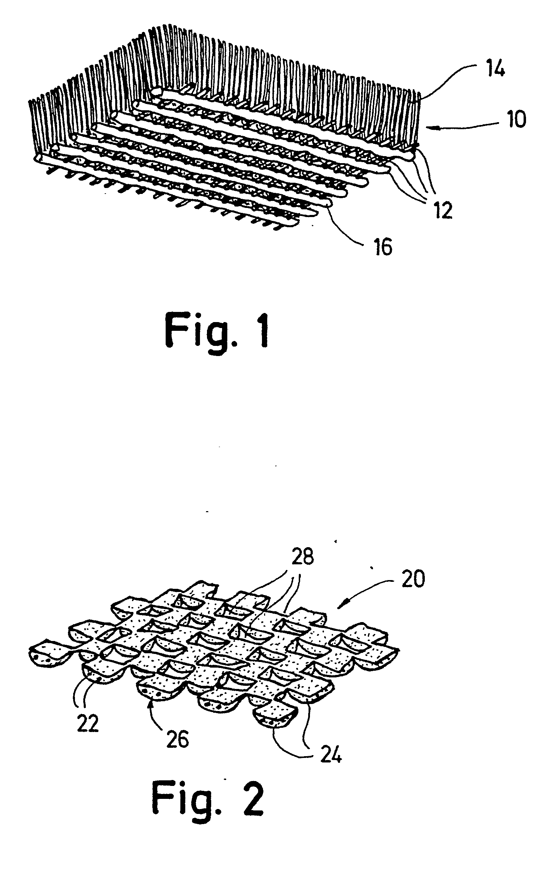

Die Fig. 1 zeigt ein Stück einer als Bodenbelag verwendbaren Rasenbahn (obere Warenbahn) 10, die im wesentlichen aus einem textilen Grundträger 12 und darin verankerten Polbändchen 14 besteht. Der Grundträger 12 kann beispielsweise ein Gewebe oder ein Gewirke aus Kunststoffgarnen sein, während die Polbändchen 14 zweckmäßigerweise aus thermoplastischen Kunststoffen hergestellt werden. Der Grundträger 12 ist auf seiner Unterseite mit einer sogenannten Rückenbeschichtungsmasse 16 beschichtet, und zwar bei der gezeigten Ausführungsform nur partiell, um die Rasenbahn wasserdurchlässig zu machen.

Das in Fig. 2 dargestellte Stück einer Unterlagsbahn (untere Warenbahn) 20 besteht bei der bevorzugten Ausführungsform aus einem Gewebe, einem Gewirke oder einem Gestrick aus Kernfäden 22 und einer Überzugsmasse 24, welche polsterartige, nach unten vorspringende Noppen 26 bildet und Öffnungen 28 freiläßt, so daß auch die Unterlagsbahn 20 wasserdurchlässig ist.

Vorzugsweise bestehen die Rückenbeschichtungsmasse 16 und die Überzugsmasse 24 zumindest im wesentlichen aus thermoplastischen Kunststoffen und insbesondere beide aus Weich-PVC.

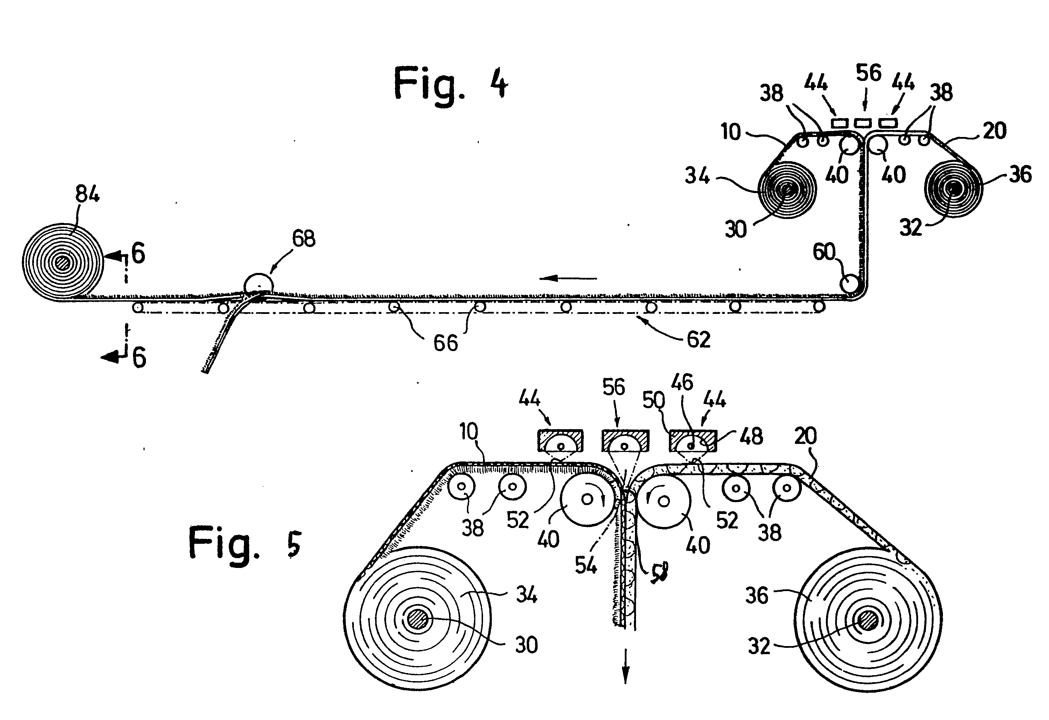

In Fig. 3 ist eine zweite, bevorzugte Ausführungsform der Bodenbelagsbahn der Erfindung dargestellt, wobei dieselben Bezugszeichen wie in den Fig. 1 und 2 verwendet worden sind. Wie die Fig. 3 jedoch deutlich erkennen läßt, besitzt die Unterlagsbahn 20 auf ihrer Oberseite wannenförmige Vertiefungen 100, die erfindungsgemäß dadurch gebildet werden, daß man beim Aufbringen der Überzugsmasse 24 auf den textilen Kern der Unterlagsbahn 20 das Material an Rändern der noppenförmigen Polsterbereiche geringfügig über den textilen Kern (bei der Herstellung nach unten) hinausfließen läßt. Erfindungsgemäß werden nun lediglich die nach oben vorspringenden Randbereiche 102 der Vertiefungen 100 mit der Rasenbahn verschweißt, so daß die wannenförmigen Vertiefungen 100 zumindest im wesentlichen erhalten bleiben und durch die Öffnungen der Rasenbahn hindurchgesickertes Wasser teilweise zurückhalten können.

Die in den Fig. 4 bis 6 gezeigte erfindungsgemäße Anlage zur Durchführung einer besonders vorteilhaften Ausführungsform des erfindungsgemäßen Verfahrens besitzt zwei drehbar gelagerte Tragstangen 30 und 32 für eine Rasenbahnrolle 34 und eine Unterlagsbahnrolle 36, von denen die beiden Warenbahnen abgezogen werden. Sie verlaufen zunächst über Stützrollen 38, die in einer horizontalen Ebene angeordnet sind, so daß auch die Warenbahnen horizontal verlaufen, und zwar mit den später miteinander zu verbindenden Seiten nach oben gekehrt. Dann sind die beiden Warenbahnen über zwei Kühlwalzen 40 geführt, die ebenso wie die Stützrollen 38 drehbar gelagert, jedoch durch nicht gezeigte Mittel gegenläufig angetrieben und gekühlt sind. Sie befinden sich in einem solchen Abstand voneinander, daß die beiden Warenbahnen mit den miteinander zu verbindenden Seiten unter leichtem Druck gegeneinander angelegt werden.

Wie am besten die Fig. 5 erkennen läßt, sind über der Rasenbahn 10 und der Unterlagsbahn 20 jeweils vor den Kühlwalzen 40 Infrarotstrahler 44 angeordnet, die der Vorwärmung der Rückenbeschichtungsmasse 16 der Rasenbahn und der Überzugsmasse 24 der Unterlagsbahn dienen. Sie bestehen im wesentlichen aus einem Heizstab 46 und einem einen Hohlspiegel 48 aufweisenden Gehäuse 50, die sich sämtlich über die ganze Breite der jeweiligen Bahn 10 bzw. 20 erstrecken und so ausgebildet und angeordnet sind, daß die Fokuslinie 52 eines jeden der Infrarotstrahler in die Ebene der Unterseite der Rasenbahn 10 bzw. der Oberseite der Unterlagsbahn 20 zu liegen kommt.

Wenn die beiden Warenbahnen 10, 20 um die Kühlwalzen 40 herumlaufen, bilden sie, ehe sie sich berühren, einen oben offenen Zwickel 54, über dem ein weiterer Infrarotstrahler 56 angeordnet ist. Dieser weist grundsätzlich denselben Aufbau auf wie die Infrarotstrahler 44, jedoch besitzt sein Hohlspiegel eine größere Brennweite, so daß die Fokuslinie 58 dieses Infrarotstrahlers innerhalb des Zwickels und vorzugsweise ganz kurz vor der oder an derjenigen Stelle liegt, an der sich die beiden Warenbahnen erstmals berühren.

Erfindungsgemäß ist die Anlage so ausgebildet, daß die Geschwindigkeit der beiden Warenbahnen in der Größenanordnung von 1 bis 3 Metern pro Minute liegt und die Temperaturen unterhalb der Infrarotstrahler 44 und geringfügig über den beiden Warenbahnen ca. 300° Celsius betragen. Hingegen beträgt die Temperatur im Bereich der Spitze des Zwickels 54 und kurz über der Berührungsstelle der beiden Warenbahnen nur noch ca. 130 bis 150° Celsius.

Bei der genannten Vorschubgeschwindigkeit der beiden Warenbahnen reichen die vorstehend aufgeführten Temperaturen aus, um das PVC der Rückenbeschichtungsmasse 16 und der Überzugsmasse 24 oberflächlich zumindest in einen teigigen Zustand zu bringen, so daß beim aneinander Anlegen der beiden Warenbahnen durch die Kühlwalzen 40 die Warenbahnen durch das PVC miteinander verschweißt werden. Erfindungsgemäß wird durch die Kühlwalzen verhindert, daß während der Aufheizphase des erfindungsgemäßen Verfahrens die Polbändchen 14 der Rasenbahn 10 und die Noppen 26 der Unterlagsbahn 20 unzulässig verformt werden.

Von den Kühlwalzen 40 verlaufen die Warenbahnen über eine drehbar gelagerte Umlenkwalze 60, hinter der sie auf einem von einem Maschendraht gebildeten Förderband 62 abgelegt werden, und zwar mit nach oben gewandter Rasenbahn 10. Auch das Förderband 62 wird durch nicht gezeigte Mittel so angetrieben, daß die Warenbahnen zwischen den Kühlwalzen 40 und dem Förderband zumindest im wesentlichen frei von Längszugspannungen bleiben.

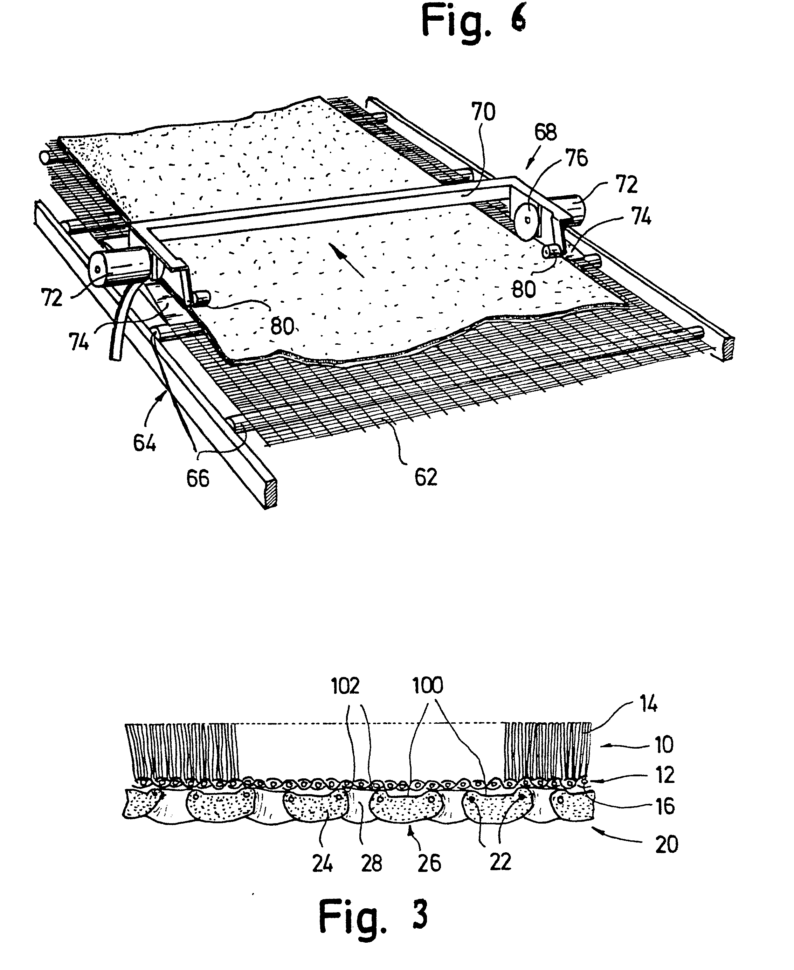

Wie am besten die Fig. 6 erkennen läßt, verläuft das Förderband 62 über einen Rahmen 64, in dem Stützwalzen 66 drehbar gelagert sind. In hinreichendem Abstand von der Schweißvorrichtung ist über dem Förderband 62 eine Schneidvorrichtung 68 angeordnet, um die Längskanten der in der Zwischenzeit abgekühlten Warenbahnen zu beschneiden und so die Warenbahnen auf eine vorgegebene Breite zu bringen. Diese Schneidvorrichtung besitzt eine das Förderband 62 überspannende Brücke 70, die über nicht dargestellte Mittel am Rahmen 64 befestigt ist und im Bereich der beiden Längsränder der Warenbahnen jeweils einen schneiden- oder keilförmig ausgebildeten Auflaufschuh 74 aufweist, die zwischen dem Förderband 62 und den Warenbahnen angeordnet sind und die Längsrandbereiche der Warenbahnen vom Förderband 62 abheben. Ferner besitzt die Schneidvorrichtung auf jeder Seite eine von einem elektrischen Motor 72 angetriebene Messerscheibe 76, um die angehobenen Längsrandbereiche der Warenbahnen zu beschneiden. Diese werden vor den Messerscheiben durch Niederhalterrollen 80 gegen die Auflaufschuhe 74 angedrückt.

Hinter dem Förderband 62 können dann die beiden miteinander verschweißten Warenbahnen zu einer Rolle 84 aufgerollt werden.

Erfindungsgemäß können an die Stelle der Infrarotstrahler 44 und 56 auch Mikrowellen-Heizgeräte treten, da sich prinzipiell alle Wärmequellen für das Aufschmelzen der Rückenbeschichtungsmasse 16 und der Überzugsmasse 24 eignen, soweit sich dabei chemische Veränderungen dieser Massen vermeiden lassen.

Als Wärmequellen besonders bevorzugt werden auf dem Markt erhältliche Bandstrahler SATURN 250 und Mittelwellen-Modulstrahler der Firma Heraeus. An die Stelle von sich über die ganze Warenbahnbreite erstreckenden Wärmequellen können natürlich auch kürzere Strahler treten, wobei man diese zur Erhitzung des Zwickels 54 hintereinander liegend anordnet, während zum Vorwärmen der beiden Warenbahnen in deren Laufrichtung hintereinander liegende und seitlich gegeneinander versetzte Strahler verwendet werden können.

## Patentansprüche

1. Elastische Bodenbelagsbahn aus einer Polware als oberer Warenbahn (10), welche einen Öffnungen für den Durchtritt von Wasser aufweisenden, den Pol (14) haltenden Träger (12) besitzt, dessen Unterseite nur partiell mit einem zwischen den Öffnungen thermoplastische Bereiche bildenden Thermoplasten (Rückenbeschichtungsmasse 16) beschichtet ist, und aus einer elastischen unteren Warenbahn (20) die gleichfalls Öffnungen (28) für den Wasserdurchtritt aufweist und deren Oberseite mindestens teilweise von einem zwischen den Öffnungen thermoplastische Bereiche bildenden Thermoplasten (Überzugsmasse 24) gebildet sowie mit der oberen Warenbahn fest verbunden ist, dadurch gekennzeichnet, daß die beiden Warenbahnen nur partiell miteinander verschweißt sind, indem thermoplastische Bereiche der oberen Warenbahn mit thermoplastischen Bereichen der unteren Warenbahn verschweißt sind.

2. Bodenbelagsbahn nach Anspruch 1, dadurch gekennzeichnet, daß die Oberseite der unteren Warenbahn (20) wannenförmige Vertiefungen (100) aufweist und im wesentlichen nur die Ränder dieser Vertiefungen mit thermoplastischen Bereichen der oberen Warenbahn (10) verschweißt sind.

3. Verfahren zur Herstellung einer Bodenbelagsbahn nach Anspruch 1 oder 2, bei dem die beiden Warenbahnen synchron bewegt und so geführt werden, daß sie vor dem Verbinden aufeinander zu verlaufen und die Unterseite der oberen Warenbahn sowie die Oberseite der unteren Warenbahn auf derselben Seite liegen, und bei dem der Thermoplast an der Unterseite der oberen Warenbahn durch Erhitzen mindestens teilweise plastifiziert wird, worauf die beiden Warenbahnen gegeneinandergepreßt und miteinander verbunden werden, dadurch gekennzeichnet, daß die thermoplastischen Bereiche beider Warenbahnen vor dem Gegeneinanderpressen durch mindestens eine Wärmequelle mindestens teilweise plastifiziert werden und daß die Bodenbelagsbahn nach dem Gegeneinanderpressen zum Abkühlen auf einem Förderband abgelegt wird.

4. Verfahren nach Anspruch 3, dadurch gekennzeichnet, daß die Unterseite der oberen Warenbahn und die Oberseite der unteren Warenbahn vor dem Zusammenführen der beiden Warenbahnen vorgewärmt und unmittelbar vor dem Aneinanderlegen dadurch plastifiziert werden, daß die Strahlung mindestens eines Energiestrahlers in den von den Warenbahnen beim Zusammenführen gebildeten Zwickel hineingerichtet wird.

5. Verfahren nach Anspruch 4, dadurch gekennzeichnet, daß die Strahlung des Energiestrahlers so fokussiert wird, daß der Fokus im Bereich der Spitze des Zwickels liegt.

6. Verfahren nach einem der Ansprüche 3 bis 5, dadurch gekennzeichnet, daß die miteinander verbundenen Warenbahnen nach dem Abkühlen auf Sollbreite geschnitten werden.

## Claims

1. An elastic surface-covering web consisting of a pile material as upper web (10) which has a base (12) for holding the pile (14) and having openings for the passage of water, the underside of said base being coated only partially with a thermoplastic material (back coating substance 16) forming thermoplastic areas between said openings, and an elastic lower web (20) with openings (28) to allow passage of water, the upper side of said web being securely bonded to said upper web and being formed at least partially by a thermoplastic material (coating substance 24) forming thermoplastic areas between said openings, characterized in that the two webs are only partially heat-sealed with one another in that thermoplastic areas of said upper web are heat-sealed to thermoplastic areas of said lower web.

2. Surface-covering web as defined in claim 1, characterized in that the upper side of said lower web (20) has trough-like recesses (100) and it is substantially only the edges of said recesses which are heat-sealed to thermoplastic areas of said upper web (10).

3. A method of producing a surface-covering web as defined in claims 1 or 2, with which the two webs are moved synchronously and guided such that prior to bonding they run towards one another and the underside of the upper web and the upper side of the lower web are located on the same side, and with the thermoplastic material on the underside of said upper web is at least partially plastified by heating, whereupon the two webs are pressed together and bonded, characterized in that the thermoplastic areas of the two webs are at least partially plastified by at least one heat source prior to said webs being pressed together and that subsequent to said webs being pressed together the surface-covering web is placed on a conveyor belt to cool.

4. Method as defined in claim 3, characterized in that the underside of the upper web and the upper side of the lower web are preheated prior to said two webs being brought together and plastified immediately prior to being placed together by directing the radiation from at least one energy radiator into the funnel-shaped space formed by the webs as said webs are being brought together.

5. Method as defined in claim 4, characterized in that the radiation from the energy radiator is focused such that the focal point is in the bottom area of said funnel-shaped space.

6. Method as defined in any of claims 3 to 5, characterized in that the webs bonded with one another are cut after cooling to the required width.

## Revendications

1. Nappe de revêtement de sol élastique à base d'un tissu à poil comme nappe supérieure (10), qui comporte un support (12) présentant des orifices pour le passage de l'eau et retenant le poil (14) et dont la face inférieure est enduite uniquement partiellement d'une matière thermoplastique (masse d'enduction de dos 16) formant des zones thermoplastiques entre les orifices, et à base d'un nappe inférieure élastique (20), qui présente également des orifices (28) pour le passage de l'eau et dont la face supérieure est formée au moins partiellement d'une matière thermoplastique (masse de revêtement 24) formant des zones thermoplastique entre les orifices et est reliée de manière fixe à la nappe supérieure, caractérisée en ce que les deux nappes sont soudées l'une à l'autre uniquement partiellement, des zones thermoplastiques de la nappe supérieure étant soudées à des zones thermoplastiques de la nappe inférieure.

2. Nappe de revêtement de sol suivant la revendication 1, caractérisée en ce que la face supérieure de la nappe inférieure (20) présente des évidements en forme de cuvettes (100) et en ce que sensiblement seuls les bords de ces évidements sont soudés avec des zones thermoplastique de la nappe supérieure (10).

3. Procédé de préparation d'une nappe de revêtement de sol suivant l'une des revendications 1 et 2, dans lequel les deux nappes sont déplacées de manière synchrone et guidées de façon qu'elles s'étendent l'une sur l'autre avant la liaison et que la face inférieure de la nappe supérieure ainsi que la face supérieure de la nappe inférieure se trouvent du même côté et dans lequel la matière thermoplastique de la face inférieure de la nappe supérieure est plastifiée au moins partiellement par chauffage, après quoi les deux nappes sont pressées l'une contre l'autre et mutuellement reliées, caractérisé en ce que les zones thermoplastiques des deux nappes sont, avant le pressage mutuel, au moins partiellement plastifiées par au moins une source de chaleur et en ce que la nappe de revêtement de sol est, après le pressage mutuel, déposée sur une bande transporteuse pour le refroidissement.

4. Procédé suivant la revendication 3, caractérisé en ce que la face inférieure de la nappe supérieure et la face supérieure de la nappe inférieure sont, avant la réunion des deux nappes, préalablement chauffées et plastifiées directement avant leur application l'une sur l'autre, par le fait que l'irradiation d'au moins un dispositif irradiant de l'énergie est dirigé dans le coin formé par les nappes au cours de leur réunion.

5. Procédé suivant la revendication 4, caractérisé en ce que le rayonnement du dispositif irradiant de l'énergie est focalisé de façon que le foyer se trouve dans la zone de la pointe du coin.

6. Procédé suivant l'une des revendications 3 à 5, caractérisé en ce que les nappes mutuellement reliées sont découpées à la largeur prescrite après le refroidissement.

## Fig. 1

## Fig. 2

# Fig. 4

# Fig. 5

0 062 741

# Fig. 6

70
68
76
72
74
80
72
74
64
66
80
62

102    100

14
10
12
16
20

24    28    26    22

# Fig. 3